**Europäisches Patentamt**

(19) **European Patent Office**

**Office européen des brevets**

(11) Veröffentlichungsnummer: **0 163 158**

**B1**

(12) # EUROPÄISCHE PATENTSCHRIFT

(45) Veröffentlichungstag der Patentschrift:
23.11.88

(51) Int. Cl.⁴: **E 03 F 5/14**

(21) Anmeldenummer: **85105326.4**

(22) Anmeldetag: **02.05.85**

(54) Vorrichtung zum Entfernen von Rechen- und/oder Siebgut aus in einem Gerinne strömender Flüssigkeit.

(30) Priorität: **30.05.84 DE 3420157**

(43) Veröffentlichungstag der Anmeldung:
**04.12.85 Patentblatt 85/49**

(45) Bekanntmachung des Hinweises auf die Patenterteilung:
**23.11.88 Patentblatt 88/47**

(84) Benannte Vertragsstaaten:
**AT BE CH FR GB IT LI LU NL SE**

(56) Entgegenhaltungen:
**DE-A-2 142 540**
**DE-A-3 019 127**
**DE-A-3 028 451**
**DE-A-3 217 982**
**GB-A-2 104 402**

(73) Patentinhaber: **Hans Huber GmbH, Mariahilfstrasse 3 - 5, D-8434 Berching (DE)**

(72) Erfinder: **Huber, Hans G. Dipl.- Ing., Mariahilfstrasse 3-5, D-8434 Berching (DE)**

(74) Vertreter: **Patentanwälte Dipl.- Ing. Rudolf Bibrach Dipl.- Ing. Elmar Rehberg, Postfach 1453 Pütterweg 6, D-3400 Göttingen (DE)**

## Beschreibung

Die Erfindung bezieht sich auf eine Vorrichtung zum Entfernen von Rechen- und/oder Siebgut aus in einem Gerinne strömender Flüssigkeit nach dem Oberbegriff des Anspruches 1.

Die Vorrichtung ist insbesondere in Kläranlagen einsetzbar, kann jedoch auch in der Textilindustrie, in Schlachthöfen, Geflügelfarmen, Gerbereien usw. Verwendung finden.

Eine Vorrichtung der eingangs beschriebenen Art ist aus der DE-A-3 019 127 bekannt. Die Förderschnecke ist in der Achse des Zylindermantels des Siebrostes angeordnet und besteht aus einem Gehäuse und einer Förderschnecke. Das Gehäuse weist einen wesentlich kleineren Durchmesser auf als der Durchmesser des Siebrostes. Beide Durchmesser sind weitgehend unabhängig voneinander, so daß es damit möglich ist, die Vorrichtung ohne Änderung der Fördereinrichtungen an verschiedene Gerinnebreiten anzupassen. Der Siebrost ist stillstehend angeordnet und etwa über ein Viertel seines Umfangs im oberen Bereich unterbrochen. Die Welle der Schneckenfördereinrichtung trägt an ihrem unteren Ende mindestens einen an dem Rost entlangstreckenden Räumarm, der mit Räumgliedern besetzt ist. Der Siebrost kann aus einer Vielzahl von gleichabständig angeordneten Kreisringscheiben bestehen. Diese bekannte Vorrichtung eignet sich gut zum Entfernen von vergleichsweise grobem Rechen- bzw. Siebgut, da konstruktionsbedingt der freie Querschnitt des Siebrostes nicht beliebig klein gestaltet werden kann. Die Räumglieder an dem stillstehenden Siebrost vorbeistreichen, und zwar auch unterhalb der Wasserlinie des Gerinnes, muß das Rechengut auch unterhalb der Wasserlinie von dem Siebrost gelöst und von den Räumgliedern übernommen werden. Durch diese Relativbewegung besteht die Gefahr, daß insbesondere feines Rechen- bzw. Siebgut von dem Räumarm nicht erfaßt wird bzw. während des Entlangstreichens an dem Rost unterhalb der Wasserlinie sich von den Räumgliedern wieder löst.

Die DE-A-2 142 540 zeigt eine ähnliche Vorrichtung, die im wesentlichen aus einer Schneckenfördereinrichtung mit einer über einen aufgesetzten Motor angetriebenen Schneckenwelle besteht, die in einem Gehäuse umläuft. Das Gehäuse der Schneckenfördereinrichtung ist im unteren Bereich entsprechend dem vorgesehenen Wasserspiegel durch einen Siebrost ersetzt. Die Wendel der Förderschnecke streicht bei ihrem Antrieb unmittelbar an dem Siebrost entlang und fördert das Rechengut je nach Größe entweder aufwärts in der Fördereinrichtung oder den Siebrost hindurch. Das Gehäuse der Schneckenfördereinrichtung ist im wesentlichen zylindermantelförmig oder trogförmig ausgebildet und besitzt eine Abwurfstelle für das Rechengut. Auch hier ist der Siebrost ortsfest angeordnet. Da der Siebrost selbst gleichen Durchmesser wie das Gehäuse der Schneckenfördereinrichtung aufweist, ist die Rostfläche relativ klein, so daß sie öfter gereinigt werden muß. Die Vorrichtung läßt sich nur für bestimmte Anwendungsfälle einsetzen.

Aus der DE-OS-3 217 982 ist eine Vorrichtung zum Ausscheiden von Grob- und Faserstoffen aus verunreinigtem Wasser bekannt. Diese Vorrichtung weist ein im wesentlichen zylinderförmiges Siebrost auf, welches von einem Motor ständig in Drehbewegung versetzt wird. Der Siebrost liegt in etwa horizontal in dem Gerinne, wobei der Siebrost teilweise über der Wasserlinie hinausragt. Dem Siebrost zugeordnet ist eine Schneckenfördereinrichtung mit einer dafür vorgesehenen separaten Antriebseinheit, eine gegenüber dem Siebrost feststehende Reinigungswalze sowie sich innerhalb des Siebrostes befindliche Waschkugeln. Die in dem Gerinne mitgeführten Grob- und Faserstoffe werden in dem Siebrost eingefangen und sollen mit Hilfe der Waschkugeln durchwalkt bzw. gewaschen werden. Zum Transport der Grob- und Faserstoffe zu der Schneckenfördereinrichtung muß eine natürliche Strömung in dem Gerinne vorliegen. Nachteilig ist, daß die Strömung im Gerinne oftmals nicht ausreicht, die Grob- und Faserstoffe zu der Schneckenfördereinrichtung zu transportieren, so daß sich diese im unteren Bereich des Siebrostes ansammeln und Verstopfungen hervorrufen. Auch ist diese Vorrichtung mit ihren zwei Antriebseinheiten, einmal für das Siebrost und einmal für die Schneckenfördereinrichtung, sowie mit den Waschkugeln relativ kompliziert aufgebaut und daher störanfällig. Zur Abscheidung von feinem Rechen- und/oder Siebgut ist diese Vorrichtung nicht einsetzbar.

Der Erfindung liegt die Aufgabe zugrunde, eine Vorrichtung der eingangs beschriebenen Art derart weiterzubilden, daß die Abscheidung von feinem Rechen- und/oder Siebgut wesentlich gesteigert wird. Diese Aufgabe wird durch die kennzeichnenden Merkmale des Patentanspruches 1 gelöst.

Unterhalb der Wasserlinie kommt damit mit dem Rechen- und/oder Siebgut nur ein einziges Teil, nämlich der Siebrost selbst in Berührung, so daß das Rechen- und/oder Siebgut an dem Siebrost selbst nicht nur gelagert, sondern von diesem auch beim Umlauf nach oben gefördert wird. Es ist also keine Übergabe oder Übernahme des Rechen- und/oder Siebgutes von einem zusätzlichen Räumteil unterhalb der Wasserlinie erforderlich. Außerdem ist es auf diese Art und Weise möglich, den Siebrost hinsichtlich seiner durchbrochenen Fläche genau an die Anwendungsfälle anzupassen. Der Siebrost kann beispielsweise eine 3-mm-Schlitzlochung aufweisen. Die Ablöseeinrichtung dient dem Loslösen von Siebgut, welches nicht allein aufgrund der Schwerkraft von dem inneren Umfang des Siebrostes abfällt. Dabei ist die Ablöseeinrichtung so angeordnet, daß das von ihr abgelöste Siebgut auf jeden Fall in den Einwurftrichter der Förderschneckeneinrichtung hineinfällt, so daß es dort erfaßt, aus dem Gerinne heraustransportiert und dabei gleichzeitig entwässert und kompaktiert wird. Der Durchmesser des Siebrostes ist auch hier unabhängig von dem Durchmesser des Gehäuses der Förderschnecke, so daß in einfacher Weise eine Anpassung an verschiedene Gerinnebreiten möglich ist, ohne daß eine Änderung der Schneckenfördereinrichtung erforderlich ist. Selbstverständlich muß der Siebrost entsprechend gelagert und auch gegenüber dem Gerinne abgedichtet werden, damit die Flüssigkeit im Gerinne zwangsweise durch die Fläche des Siebrostes hindurchströmen muß.

Der umlaufend angetriebene Siebrost ist auf seinem inneren Umfang mit Leitblechen oder anderen Förderhilfen versehen, die dazu dienen, die Förderung des Siebgutes bei dem Umlauf des Siebrostes nach oben zu verbessern. Dies gilt insbesondere für mittelgroßes Siebgut oder für eine hohe Beaufschlagung des Siebrostes mit Siebgut. Dabei ist zu berücksichtigen, daß die Vorrichtung in erster Linie sowieso zum Abscheiden von Feingut geeignet ist.

Für die Realisierung der Ablöseeinrichtung bieten sich verschiedene Möglichkeiten an. So kann die Ablöseeinrichtung eine mit dem Siebrost zusammenarbeitende Bürste oder auch Spritzwasserdüsen aufweisen. Auch eine gleichzeitige Anwendung beider Mittel oder noch anderer Einrichtungen ist durchaus sinnvoll. Dies richtet sich im wesentlichen nach der Art des abzuscheidenden Gutes, der Größe desselben und der auftretenden Haftung, mit der das Siebgut am inneren Umfang des Siebrostes festhängt.

Der Siebrost ist zweckmäßig mit der Förderschnecke verbunden. Es ist ein gemeinsamer Antrieb hierfür vorgesehen, so daß der Antrieb des Siebrostes von dem Antrieb der Welle der Förderschnecke abgenommen wird. Dies erbringt die Möglichkeit, nur einen Antriebsmotor für die gesamte Vorrichtung einsetzen zu können. Wird dagegen der Siebrost getrennt zu der Schneckenfördereinrichtung angetrieben, was durchaus auch denkbar ist, so ergibt sich der Vorteil, daß die Umlaufgeschwindigkeiten aneinander angepaßt werden können. Für die direkte Verbindung des Siebrostes mit der Förderschnecke können ein oder mehrere Antriebsarme vorgesehen sein, die am freien Ende der Förderschnecke angreifen und zu dem Siebrost führen.

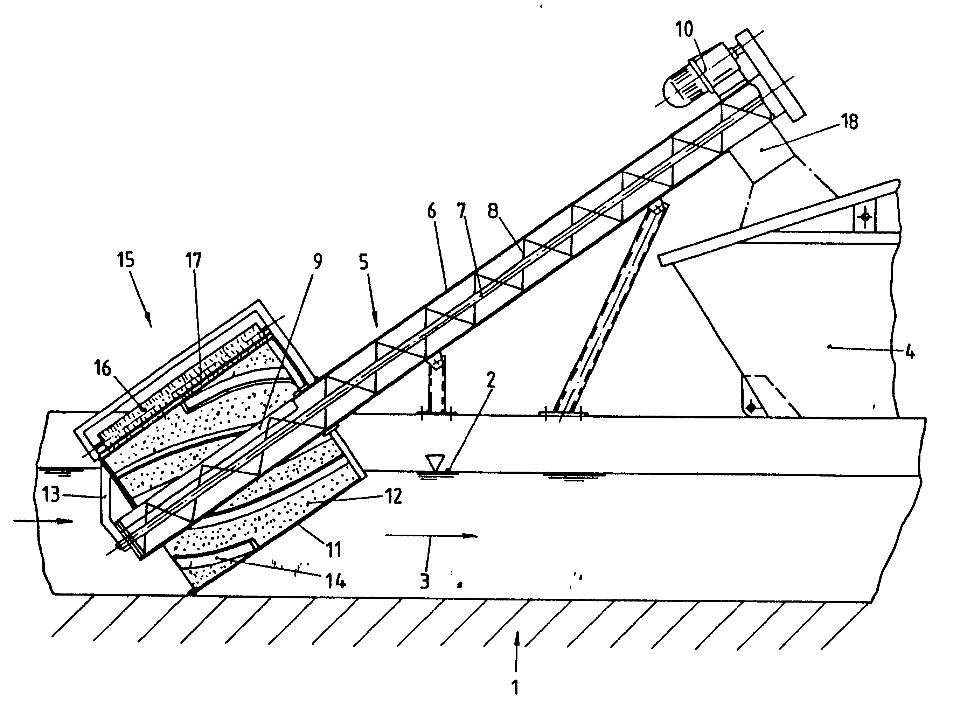

Die Erfindung wird anhand eines bevorzugten Ausführungsbeispiels weiter beschrieben. Die Zeichnung zeigt eine schematisierte Schnittdarstellung der Vorrichtung.

Ein Gerinne 1 ist unterhalb der Wasserlinie 2 mit Flüssigkeit gefüllt, die in Richtung eines Pfeils 3 strömt. Die Flüssigkeit enthält Rechen- und/oder Siebgut, welches aus dem Gerinne 1 herausgeholt, entwässert und kompaktiert in einen Container 4 abgeschieden werden soll.

Die Vorrichtung ist schräggestellt angeordnet und reicht bis zur Sohle des Gerinnes 1 hinab. Sie weist eine Schneckenfördereinrichtung 5 auf, die im wesentlichen aus einem stillstehenden Gehäuse 6 und einer Schneckenwelle 7 besteht, die mit einer Schneckenwendel 8 besetzt ist. Das Gehäuse 6 besitzt im unteren Bereich einen Einwurftrichter 9, ist also an dieser Stelle im oberen Bereich durchbrochen. Für den Antrieb der Schneckenwelle 7 ist ein Motor 10 mit Untersetzungsgetriebe vorgesehen.

Um das den Einwurftrichter 9 aufweisende Ende der Schneckenfördereinrichtung 5 herum ist ein Siebrost 11 vorgesehen bzw. gelagert, dessen Durchmesser erheblich größer als der Durchmesser des Gehäuses 6 ist. Der Siebrost 11 besteht im wesentlichen aus einem zylindermantelförmigen Abschnitt aus Blech, welches in Anpassung an das abzuscheidende Rechen- bzw. Siebgut durchbrochen ausgebildet ist. Diese Durchbrechung kann in Form einer Schlitzlochung 12 vorgesehen sein. Der Siebrost 11 ist ebenfalls umlaufend angetrieben und muß daher in dem Gerinne 1 entsprechend gelagert und abgedichtet sein. Zur Übertragung des Antriebes von dem Motor 10 über die Schneckenwelle 7 sind am freien Ende der Schneckenwelle 7 angreifende Antriebsarme 13 vorgesehen. Es versteht sich, daß die Stirnfläche des Siebrostes 11 im Bereich der Antriebsarme 13 offen gestaltet ist, während die im wesentlichen außerhalb der Wasserlinie 2 befindliche Stirnfläche des Siebrostes 11 geschlossen ausgebildet ist. Am inneren Umfang des Siebrostes 11 können Leitbleche 14 vorgesehen sein, die der Förderung an inneren Umfang des Siebrostes 11 abgeschiedenen Rechen- bzw. Siebgutes nach oben dienen.

Diese Leitbleche 14 oder andere Fördereinrichtung sind dann vorteilhaft, wenn vermehrt Rechengut anfällt oder groberes Rechengut - relativ zu dem Feingut - auftritt.

Im Bereich der höchsten Umlaufstelle des zylindrischen Mantels des Siebrostes ist eine Ablöseeinrichtung 15 vorgesehen, die verschleißfeste Bürsten 16, z. B. in Walzenform, und/oder Spritzwasserdüsen 17 aufweisen kann. Die Ablöseeinrichtung 15 dient dazu, solches Sieb- bzw. Rechengut, welches nicht allein aufgrund der Schwerkraft vom inneren Umfang des Siebrostes 11 abfällt, zu lösen und das Zusetzen des Siebrostes zu vermeiden.

Bei der Durchströmung des Siebrostes lagert sich das Sieb- bzw. Rechengut jeweils an dem Teil der Innenfläche des Siebrostes 11 ab, die unterhalb der Wasserlinie 2 zu liegen kommt, während die Flüssigkeit durch den Siebrost 11 hindurchtritt. Da der Siebrost 11 umlaufend angetrieben ist, wird dieses Rechen- bzw. Siebgut am inneren Umfang des Siebrostes 11 nach oben befördert, wo es über die Wasserlinie 2 hinaustritt. Dabei wird das Siebgut durch Haftung an der inneren Oberfläche des Siebrostes 11 gefördert. Diese Förderung wird durch die Leitbleche 14 unterstützt. Im oberen Bereich fällt das Rechen- bzw. Siebgut teilweis aufgrund der Schwerkrafteinwirkung, teilweise infolge der Ablöseeinrichtung 15 direkt in den Einwurftrichter 9 der Schneckenfördereinrichtung 5. Der Bereich des Einwurftrichters 9 befindet sich zwar teilweise auch Unterhalb der Wasserlinie 2, jedoch findet hier eine Anreicherung des Rechen- bzw. Siebgutes statt, welches von der Schneckenwendel 8 der Schneckenwelle 7 erfaßt und nach oben aufwärts gefördert wird. Dabei findet eine Entwässerung und Verdichtung des Rechen- bzw. Siebgutes statt. Es entsteht ein Kompaktiergut, welches letztendlich an der Abwurfstelle 18 aus dem Gehäuse 6 der Schneckenfördereinrichtung 5 herausgefördert wird und in einen Container 4 fällt, mit dem es abtransportiert werden kann.

## Patentansprüche

1. Vorrichtung zum Entfernen von Rechen- und/oder Siebgut aus in einem Gerinne (1) strömender Flüssigkeit, mit einem schräggestellten, teilweise in die Flüssigkeit eingetauchten, im Gerinne gelagerten, zylindermantelförmigen Siebrost (11), der anströmseitig eine offene und abströmseitig eine geschlossene Stirnseite aufweist, mit einer koaxial zum zylindermantelförmigen Siebrost angeordneten, zu einer Abwurfstelle außerhalb der Flüssigkeit führenden Fördereinrichtung (5) mit einer angetriebenen Förderschnecke (8), wobei die Fördereinrichtung im Bereich des Siebrostes einen Einwurftrichter (9) für das Rechen- und/oder Siebgut aufweist, und mit einer über dem Einlauftrichter angeordneten Ablöseeinrichtung (15) für das Rechen- und/oder Siebgut, dadurch gekennzeichnet, daß der Siebrost (11) umlaufend angetrieben und auf seiner Innenseite mit Leitflächen (14) versehen ist, und daß die Ablöseeinrichtung (15) ortsfest auf der Außenseite des Siebrostes (11) derart angeordnet ist, so daß zwischen der Ablöseeinrichtung (15) und dem Siebrost (11) eine Relativbewegung stattfindet, um das an der Innenseite des Siebrostes (11) haftende Rechen- und/oder Siebgut abzulösen.

2. Vorrichtung nach Anspruch 1, dadurch gekennzeichnet, daß die Ablöseeinrichtung (15) eine mit dem Siebrost (11) zusammenarbeitende Bürste (16) und/oder Spritzwasserdüsen (17) aufweist.

3. Vorrichtung nach Anspruch 1 und 2, dadurch gekennzeichnet, daß der Siebrost (11) mit der Förderschnecke (7, 8) fest verbunden ist und ein gemeinsamer Antrieb (10) dafür vorgesehen ist.

4. Vorrichtung nach Anspruch 3, dadurch gekennzeichnet, daß für die Verbindung des Siebrostes (11) mit der Förderschnecke (7, 8) zumindest ein Antriebsarm (13) vorgesehen ist.

## Claims

1. Apparatus for removing rakings and/or screenings from liquid flowing in a canal (1), having an inclined cylinder jacket-shaped screen grid (11) partially immersed in the liquid and mounted in the canal, which exhibits an open end face at the inlet side and a closed end face at the outlet side, with a conveyor device (5) arranged coaxially to the cylinder jacket-shaped screen grid and leading to a discharge point outside the liquid, with a driven transport screw (8), the conveyor device exhibiting a feed hopper (9) for the rakings and/or screenings in the region of the screen grid, and with a separator device (15) for the rakings and/or screenings arranged above the feed hopper, characterized in that the screen grid (11) is driven in rotation and provided on its inside with deflectors (14) and that the separator device (15) is arranged stationary on the outside of the screen grid (11) in such a way that a relative movement occurs between the separator device (15) and the screen grid (11) in order to separate the rakings and/or screenings which adhere to the inside of the screen grid (11).

2. Apparatus according to Claim 1, characterized in that the separator device (15) exhibits a brush (16) which co-operates with the screen grid (11) and/or spray water nozzles (17).

3. Apparatus according to Claims 1 and 2, characterized in that the screen grid (11) is connected firmly to the transport screw (7, 8) and a common drive (10) is provided for the same.

4. Apparatus according to Claim 3, in that at least one drive arm (13) is provided for the connection of the screen grid (11) to the transport screw (7, 8).

## Revendications

1. Dispositif pour enlever des matériaux flottants d'un liquide coulant dans un égout (1), avec une grille de criblage (11) en forme d'enveloppe cylindrique disposée obliquement, immergée partiellement dans le liquide, portée par des paliers situés dans l'égout, présentant en amont une face frontale ouverte et en aval une face frontale fermée, avec un dispositif transporteur (5) disposé coaxialement à la grille de criblage en forme d'enveloppe cylindrique, aboutissant à un poste de décharge (18) en dehors du liquide, avec une vis sans fin transporteuse (8) entraînée par un moteur, le dispositif transporteur (5) présentant dans la région de la grille de criblage une trémie réceptrice (9) pour les matériaux flottants, et avec un dispositif râcleur (15) disposé au dessus de la trémie réceptrice pour les matériaux flottants, caractérisé en ce que la grille de criblage (11) est entraînée en rotation continuellement et en ce qu'elle est munie sur sa paroi intérieure de déflecteurs (14), et en ce que le dispositif râcleur (15) est installé à poste fixe sur la paroi externe de la grille de criblage (11), de telle sorte qu'il se produise un mouvement relatif entre le dispositif râcleur (15) et la grille de criblage (11) pour détacher les matériaux flottants ayant adhéré à la surface interne de la grille de criblage (11).

2. Dispositif selon la revendication 1, caractérisé en ce que le dispositif râcleur (15) comporte une brosse (16) coopérant avec la grille de criblage (11) et/ou des buses (17) d'arrosage à l'eau.

3. Dispositif selon les revendications 1 et 2, caractérisé en ce que la grille de criblage (11) est liée de manière fixe à la vis transporteuse (7, 8), et qu'un moyen d'entraînement (10) commun est prévu à cet effet.

4. Dispositif selon la revendication 1, caractérisé en ce qu'au moins un bras d'entraînement (13) est prévu pour la liaison de la grille de criblage (11) avec la vis transporteuse (7, 8).

0 163 158